# EUROPÄISCHE PATENTSCHRIFT

(11) **EP 3 269 959 B1**
(45) Veröffentlichungstag und Bekanntmachung des Hinweises auf die Patenterteilung: **04.09.2019**
(21) Anmeldenummer: 17179617.0
(22) Anmeldetag: 04.07.2017
(51) Int. Cl.: F02B 37/18, F02M 26/54, F16K 31/04, F16K 49/00, H02K 5/20, H02K 7/116, H02K 9/19, H02K 9/22, H02K 11/33, F01D 17/24, F01D 7/00, F16K 31/53, F16K 37/00

(54) **STELLVORRICHTUNG**
ACTUATING DEVICE
DISPOSITIF DE RÉGLAGE

(30) Priorität: 12.07.2016 DE 102016212668
(43) Veröffentlichungstag der Anmeldung: 17.01.2018
(73) Patentinhaber: Mahle International GmbH, 70376 Stuttgart (DE)
(72) Erfinder: MAKAROW, Eugen, 71636 Ludwigsburg (DE); SALFELD, Edgar, 73669 Lichtenwald (DE); WETZEL, Florian, 73666 Baltmannsweiler (DE)
(74) Vertreter: BRP Renaud & Partner mbB Rechtsanwälte Patentanwälte Steuerberater

(56) Entgegenhaltungen:
- WO-A1-2010/123899
- WO-A2-2014/090946
- DE-A1-102008 034 680
- DE-A1-102012 103 374
- DE-A1-102014 106 513
- DE-A1-102014 106 515
- DE-A1-102014 106 517

## Beschreibung

Die vorliegende Erfindung betrifft eine Stellvorrichtung zum mechanischen Betätigen einer Komponente einer Maschine. Die Erfindung betrifft insbesondere einen Abgasturbolader, der mit einer solchen Stellvorrichtung ausgestattet ist.

Bei einer Vielzahl von Maschinen gibt es Komponenten, die mechanisch betätigt werden müssen, damit die jeweilige Komponente die ihr zugeordnete Funktion innerhalb der jeweiligen Maschine erfüllen kann. Von bevorzugtem Interesse ist als Maschine hierbei ein Abgasturbolader, der als betätigbare Komponente beispielsweise eine variable Turbinengeometrie oder ein Wastegateventil aufweisen kann. Dementsprechend kann ein derartiger Abgasturbolader mit einer Stellvorrichtung ausgestattet sein, um die variable Turbinengeometrie bzw. das Wastegateventil bedarfsabhängig zu betätigen. Selbstverständlich lassen sich auch andere Maschinen mit derartigen Stellvorrichtungen ausstatten. Beispielsweise kann eine Pumpe eine solche Maschine repräsentieren, die als betätigbare Komponente ein Ventil zum Einstellen eines Volumenstroms aufweist. Mit Hilfe der Stellvorrichtung lässt sich dann das Ventil betätigen. Ebenso ist denkbar, eine Abgasrückführung als Maschine aufzufassen, die als betätigbare Komponente ein Abgasrückführventil zum Einstellen einer Abgasrückführrate aufweist. Auch diese Maschine kann mit einer Stellvorrichtung zum Betätigen des Abgasrückführventils ausgestattet sein.

Stellvorrichtungen, die sich zum mechanischen Betätigen einer Komponente einer Maschine eignen, umfassen grundsätzlich ein Gehäuse und einen im Gehäuse angeordneten Elektromotor zum Antreiben eines außen am Gehäuse angeordneten Stellglieds, das zum Koppeln mit der jeweiligen, zu betätigenden Komponente vorgesehen ist. Im Gehäuse können weitere Bauteile der Stellvorrichtung angeordnet sein, wie beispielsweise eine Getriebeeinrichtung, die antriebsmäßig zwischen einer Antriebswelle des Elektromotors und dem jeweiligen Stellglied angeordnet ist. Ebenso kann im Gehäuse eine Elektronik, insbesondere eine Sensorik zum Erkennen einer aktuellen Position oder Drehlage des Stellglieds relativ zum Gehäuse angeordnet sein.

Das Gehäuse der Stellvorrichtung weist in der Regel aus fertigungstechnischen Gründen mehrere, meist zwei Gehäuseteile auf. Je nach Anwendungsfall ist eine derartige Stellvorrichtung, aufgrund der Einsatzgebiete, beispielsweise an einem Abgasturbolader oder einer Abgasrückführung, relativ hohen Umgebungstemperaturen ausgesetzt. Diesbezüglich kommen bekanntermaßen oftmals Aluminiumgussgehäuse zum Einsatz, die ein geringes Gewicht und eine gute Wärmeleitfähigkeit aufweisen. Bekanntermaßen hängt die Lebensdauer elektrischer und elektronischer Bauteile stark von der Betriebstemperatur ab; je höher die Betriebstemperatur, desto kürzer die Lebensdauer. Bei einer Stellvorrichtung mit Elektromotor kommt erschwerend hinzu, dass der Elektromotor während seines Betriebs selbst Wärme erzeugt.

Aus dem Stand der Technik sind Stellvorrichtungen, die zum einen ein metallisches Gehäuseteil und zum anderen ein Gehäuseteil aus Kunststoff aufweisen, allgemein bekannt. Bei der Ausgestaltung eines Gehäuseteils aus Kunststoff stellt eine Abführung der Wärme häufig ein Problem dar, da Kunststoff eine schlechte Wärmeleitfähigkeit aufweist. Ebenso sind Gehäuse mit integriert angeordneten Kühlkanälen, welche von einem Fluid durchströmbar sind, zur Kühlung einer derartigen Stellvorrichtung hinlänglich bekannt.

DE 10 2014 106513 A1 zeigt einen Abgasturbolader mit einem Waste-Gate-Ventil, einem Verdichter und einer Turbine, einem Turbinengehäuse, einem Bypasskanal zur Umgehung der Turbine, einem Bypasskanalabschnitt, der im Turbinengehäuse ausgebildet ist und einem Aktorgehäuse, einem Elektromotor, der im Aktorgehäuse angeordnet ist

Aus der WO 2014/090946 A2 ist ein Aktuator bekannt, der ein aus mehreren Gehäuseteilen bestehendes Metallgehäuse, einen Elektromotor, ein Stellglied, einen die Bewegung des Elektromotors auf das Stellglied anpassender Übertragungsmechanismus und eine Elektronik zur Ansteuerung des Elektromotors aufweist, wobei zumindest ein Gehäuseteil aus Kunststoff besteht und im Bereich des aus Kunststoff bestehenden Gehäuseteils eine Wärmesenke angeordnet ist. Die Wärmesenke besitzt thermische Anbindungsflächen für die Elektronik und ist mit einem metallischen Gehäuseteil verbunden.

Die vorliegende Erfindung beschäftigt sich mit dem Problem, für eine Stellvorrichtung der vorstehend genannten Art eine verbesserte oder zumindest eine andere Ausführungsform anzugeben, die sich insbesondere durch eine reduzierte thermische Belastung der Elektronik auszeichnet und hinsichtlich des leichteren Herstellungsprozesses zudem kostengünstiger zu fertigen ist.

Dieses Problem wird für eine Stellvorrichtung erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, dass bei einer Stellvorrichtung eine sich im ersten Gehäuseteil befindliche Elektronik, insbesondere eine Sensorik, thermisch mit einem sich im zweiten Gehäuseteil befindlichen Kühlkanal verbunden ist, um diese entsprechend zu kühlen. Die Stellvorrichtung weist hierzu ein zweiteiliges Gehäuse mit einem ersten Gehäuseteil aus Kunststoff und einem zweiten Gehäuseteil auf. Im zweiten Gehäuseteil ist ein Elektromotor angeordnet, der zumindest mit seiner Antriebswelle axial in das erste Gehäuseteil, zum Antreiben eines außen am Gehäuse angeordneten Stellglieds zum Koppeln mit der zu betätigenden Komponente, hineinragt. Weiter ist im zweiten Gehäuseteil ein von einem Kühlmittel durchströmbarer Kühlkanal ausgebildet, der mit einem außen am Gehäuse vorgesehenen Kühlmitteleinlassanschluss und mit einem außen am Gehäuse vorgesehenen Kühlmittelauslassanschluss fluidisch verbunden ist. Erfindungswesentlich ist dabei, dass zumindest im Bereich der Elektronik im ersten Gehäuseteil eine axiale Aussparung vorgesehen ist, in die sich eine axial vorgesehene, wärmeleitende Erhebung am zweiten Gehäuseteil zumindest im Bereich der Elektronik hinein erstreckt.

In einer vorteilhaften Ausführungsform ist die Erhebung mit der Elektronik direkt oder indirekt wärmeleitend verbunden. Weiter kann die Erhebung somit direkt an der Elektronik, als auch indirekt über eine elektrische Isolierung und/oder eine Wärmeleitschicht an der Elektronik anliegen. Zweckmäßig kann die Erhebung zumindest an einer mit der Elektronik in Kontakt stehenden Fläche eine elektrisch isolierende Beschichtung aufweisen, um eine elektrische Isolation zwischen der Elektronik und dem Fluid, welches durch den Kühlkanal strömt, zu erreichen.

In einer bevorzugten Ausführungsform erstreckt sich der Kühlkanal in Umfangsrichtung um den Elektromotor und ist radial begrenzt zwischen einer fluiddichten äußeren Mantelwand des zweiten Gehäuseteils nach außen und einer fluiddichten inneren Mantelwand des zweiten Gehäuseteils nach innen. Die innere Mantelwand umschließt dabei einen Aufnahmeraum des zweiten Gehäuseteils in Umfangsrichtung, in die der Elektromotor eingesetzt ist. Zweckmäßig ist der im zweiten Gehäuseteil angeordnete Kühlkanal, an einer dem ersten Gehäuseteil zugewandten Seite, axial offen und wird durch Aufsetzen des ersten Gehäuseteils axial fluiddicht verschlossen.

In einer weiteren vorteilhaften Ausführungsform ist ein Steg vorgesehen, der sich von der äußeren Mantelwand bis zur inneren Mantelwand erstreckt und im Kühlkanal einen mit dem Kühlmitteleinlassanschluss verbundenen Einlassbereich von einem mit dem Kühlmittelauslassanschluss verbundenen Auslassbereich voneinander trennt. Durch Anordnung eines derartigen Steges wird das Kühlmittel in Umfangsrichtung um den Elektromotor geleitet. Die Erhebung ist bevorzugt im Bereich des Steges vorgesehen.

In einer ersten erfindungsgemäßen Ausführungsvariante ist das zweite Gehäuseteil aus Metall, insbesondere aus Aluminium hergestellt. Die wärmeleitende Erhebung ist bei dieser Ausführung integral am zweiten Gehäuseteil ausgeformt und steht an einer dem ersten Gehäuseteil zugewandten Seite hervor. Die Erhebung ragt in die Aussparung im Bereich der Elektronik des ersten Gehäuseteils hinein und kann so die Wärme von der Elektronik ableiten und wirkt dementsprechend kühlend. Die Kühlwirkung der Elektronik kann somit gesteigert werden, sodass die Elektronik auch bei hohen Umgebungstemperaturen betriebsfähig bleibt.

In einer zweiten erfindungsgemäßen Ausführungsvariante ist das zweite Gehäuseteil ebenfalls wie das erste Gehäuseteil aus Kunststoff, insbesondere als Spritzgussteil, hergestellt. Zur Wärmeableitung weist das zweite Gehäuseteil ein metallisches Wärmeleitelement auf, an dem die Erhebung ausgebildet ist. Das Wärmeleitelement erstreckt sich von der Erhebung, welche in das erste Gehäuseteil ragt bis zum Kühlkanal im zweiten Gehäuseteil. Zweckmäßig ist das Wärmeleitelement mit einem Teil seiner Oberfläche, möglichst großflächig, wärmeleitend mit der Elektronik im ersten Gehäuseteil verbunden, wobei das Wärmeleitelement die Elektronik auch teilweise oder vollständig umfassen kann. Die beschriebene Ausführungsvariante, wobei beide Gehäuseteile aus Kunststoff gefertigt werden, ist aufgrund des einfachen Herstellungsprozesses, kostengünstig zu fertigen.

Zweckmäßig ist das Wärmeleitelement am oder im Kühlkanal dem Kühlmittel ausgesetzt. Hierbei sollte das Wärmeleitelement derart ausgestaltet sein, dass es eine möglichst großflächige Kontur aufweist, um die Kontaktfläche zur Wärmeübertragung zwischen dem Wärmeleitelement und dem Kühlmittel zu erhöhen. Denkbar ist auch, dass das Wärmeleitelement vorzugsweise einen großflächigen Teil der Kühlkanalaußenwand bildet. Weiter kann das Wärmeleitelement bevorzugt an einer mit dem Kühlmittel in Kontakt stehenden Fläche eine elektrische isolierende Beschichtung aufweisen, damit eine elektrische Trennung zwischen der Elektronik und dem Kühlmittel sichergestellt werden kann.

Bei einer bevorzugten Ausführungsform bildet das Wärmeleitelement im Kühlkanal den zuvor beschrieben Steg zur Trennung des Einlassbereichs des Kühlmittels vom Auslassbereich des Kühlmittels.

Besonders vorteilhaft ist eine Ausführungsform, bei der das Wärmeleitelement von dem Kunststoff des zweiten Gehäuseteils zumindest teilweise ummantelt ist. Alternativ kann das Wärmeleitelement mit dem Kunststoff des zweiten Gehäuseteils auch teilweise umspritzt sein. Eine weitere Möglichkeit besteht darin, dass das Wärmeleitelement nach dem Spritzprozess in das zweite Gehäuseteil eingelegt bzw. eingesetzt wird.

Bei einer vorteilhaften Ausführungsform wird das Wärmeleitelement als eigenständiges Bauteil im Bereich des Kühlkanals in das zweite Gehäuseteil eingesetzt. Bei dieser Ausführungsform kann am zweiten Gehäuseteil außerdem eine zumindest teilweise radiale Aussparung an einer dem ersten Gehäuseteil zugewandten Seite im Bereich der Erhebung vorgesehen sein. Das Wärmeleitelement kann hierbei im Bereich der Erhebung einen Positionierungsabschnitt aufweisen, der in die zuvor beschriebene radiale Aussparung am zweiten Gehäuseteil eingesetzt ist. Der Positionierungsabschnitt erstreckt sich somit teilweise axial in das zweite Gehäuseteil im Bereich der Erhebung. Das Wärmeleitelement bildet in einem eingesetzten Zustand mit Ausnahme der Erhebung eine ebene Fläche mit dem zweiten Gehäuseteil an einer dem ersten Gehäuseteil zugewandten Seite.

Das heißt, das Wärmeleitelement ist abgesehen von der Erhebung in einer dem ersten Gehäuseteil zugewandten Stirnseite des zweiten Gehäuseteils versenkt angeordnet, derart, dass das Wärmeleitelement bündig mit dieser Stirnseite abschließt.

Denkbar zur vereinfachten Montage der beiden Gehäusehälften ist, dass die zugewandten Seiten der Gehäuseteile mit Ausnahme der Erhebung plan aufeinander aufliegen. Zweckmäßig ist eine axiale Dichtung zwischen den beiden Gehäuseteilen vorgesehen, die zum einen den Kühlkanal nach innen und nach außen abdichtet und zum anderen das gesamte Gehäuse vor Verunreinigungen von außen schützt. Zur Positionierung einer jeweiligen Dichtung kann am ersten Gehäuseteil oder am zweiten Gehäuseteil eine hierfür geeignete Nut ausgebildet sein. Ebenso ist es möglich die Dichtung an das erste bzw. das zweite Gehäuseteil anzuspritzen oder anzuschäumen. Grundsätzlich können sowohl einzelne Dichtringe als auch ein zusammenhängendes, einteiliges Dichtelement zum Einsatz kommen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine Schnittdarstellung im Bereich der Erhebung am zweiten Gehäuseteil der Stellvorrichtung,
- Fig. 2: eine isometrische Darstellung des zweiten Gehäuseteils der Stellvorrichtung, insbesondere aus einem metallischen Werkstoff,
- Fig. 3: eine Schnittdarstellung im Bereich des Wärmeleitelements am zweiten Gehäuseteil der Stellvorrichtung,
- Fig. 4: eine isometrische Darstellung des Wärmeleitelements,
- Fig. 5: eine isometrische Ansicht des zweiten Gehäuseteils der Stellvorrichtung mit eingesetzten Wärmeleitelement,
- Fig. 6: die isometrische Darstellung aus Fig. 5 mit angeordnetem Dichtelement.

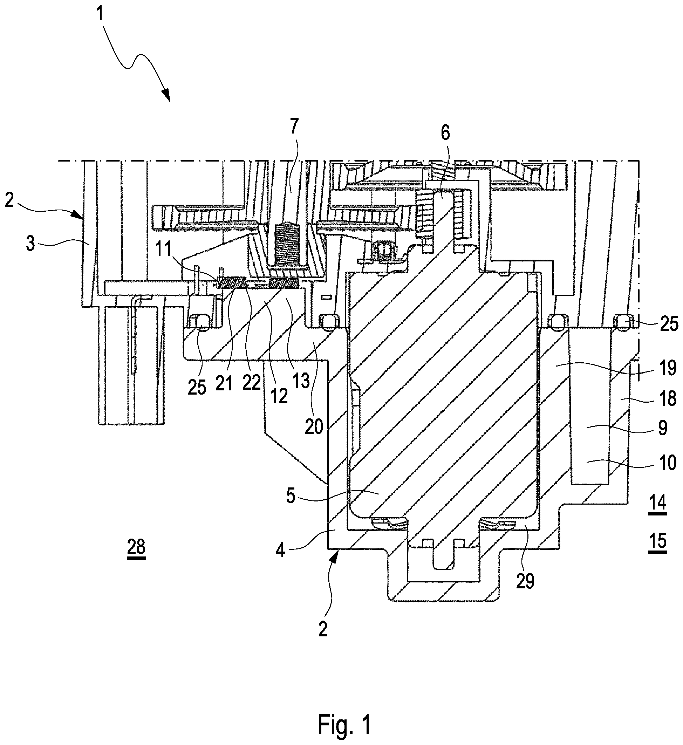

Fig. 1 zeigt schematisch eine Stellvorrichtung 1 zum mechanischen Betätigen einer im Übrigen nicht gezeigten Komponente einer Maschine. Das Gehäuse 2 der Stellvorrichtung 1 weist ein erstes Gehäuseteil 3 und ein zweites Gehäuseteil 4 auf. Ein im zweiten Gehäuseteil 4 angeordneter Elektromotor 5 ragt zumindest mit seiner Antriebswelle 6 axial in das erste Gehäuseteil 3 hinein, wobei diese über eine Getriebeeinrichtung 7 mit einem außen am Gehäuse (2) angeordneten Stellglied zum Koppeln mit der zu betätigenden Komponente interagiert. Im zweiten Gehäuseteil 4 ist ein von einem Kühlmittel 10 durchströmbarer Kühlkanal 9 angeordnet, der fluidisch verbunden ist mit einem in der Schnittdarstellung nicht zu erkennenden außen am Gehäuse 2 angeordneten Kühlmitteleinlassanschluss 14, sowie einem ebenfalls außen am Gehäuse 2 angeordneten Kühlmittelauslassanschluss 15. Im ersten Gehäuseteil 3 ist eine Elektronik 11 angeordnet, die beispielsweise ein Hallsensor zur Positionserfassung des Elektromotors 5 umfassen kann. Im Bereich dieser Elektronik 11 ist eine axiale Aussparung 12 zu einer dem zweiten Gehäuseteil 4 zugewandten Seite vorgesehen. Am zweiten Gehäuseteil 4 ist wiederum im Bereich der Elektronik 11 des ersten Gehäuseteils 3 eine wärmeleitende Erhebung 13 angeordnet, die sich axial in diese Aussparung 12 hinein erstreckt und eine verbesserte Kühlung der Elektronik 11 gewährleistet.

Die wärmeleitende Erhebung 13 kann direkt oder indirekt wärmeleitend mit der im ersten Gehäuseteil 3 angeordneten Elektronik 11 in Verbindung stehen. Zweckmäßig können zur Vermeidung eines unmittelbaren Kontaktes zwischen der wärmeleitenden Erhebung 13 und der Elektronik 11 eine elektrische Isolierschicht 21 und/oder eine Wärmeleitschicht 22 zwischen der Erhebung 13 und der Elektronik 11 angeordnet sein. Sowohl die Elektronik 11 als auch die wärmeleitende Erhebung 13 können mit einer solchen elektrisch isolierenden Schicht 21 bzw. einer Wärmeleitschicht 22 beschichtet sein.

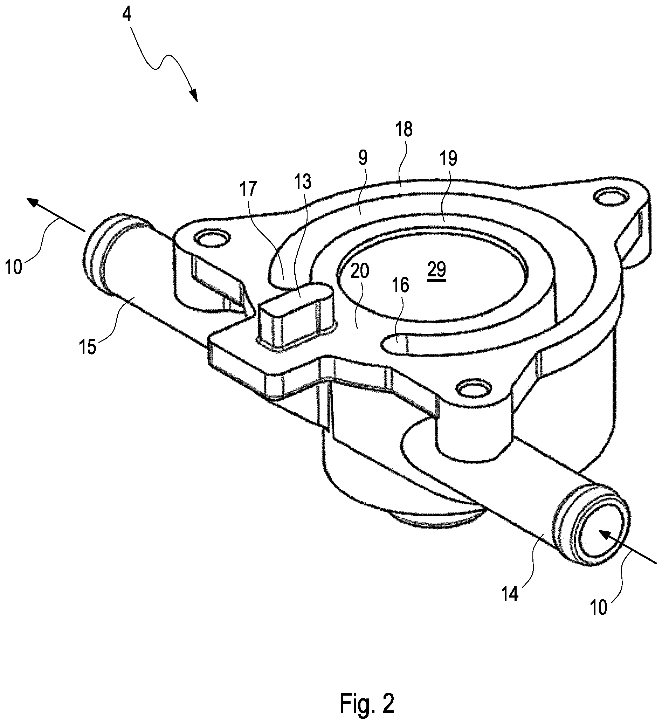

Fig. 2 zeigt eine isometrische Darstellung des zweiten Gehäuseteils 4 der Stellvorrichtung 1, insbesondere aus einem metallischen Werkstoff, welches bevorzugt als Aluminiumgussteil hergestellt ist. Die wärmeleitende Erhebung 13 ist integral am zweiten Gehäuseteil 4 ausgeformt und steht in Richtung des ersten Gehäuseteils 3 ab. Die Erhebung 13 ist derart ausgebildet, dass sie zumindest teilweise in die Aussparung 12 des ersten Gehäuseteils 3 im Bereich der Elektronik 11 hinein ragt.

Der sich in Umfangsrichtung um den Elektromotor 5 erstreckende Kühlkanal 9 ist fluiddicht radial nach außen begrenzt, durch eine äußere Mantelwand 18 des zweiten Gehäuseteils 4, sowie fluiddicht radial nach innen begrenzt, durch eine innere Mantelwand 19 des zweiten Gehäuseteils. Die innere Mantelwand 19 des zweiten Gehäuseteils 4 bildet gleichzeitig einen Aufnahmeraum 29 in Umfangsrichtung, in den der Elektromotor 5 eingesetzt ist. Das Kühlmittel 10 strömt durch den Kühlmitteleinlassanschluss 14 zunächst in einen Kühlmitteleinlassbereich 16 im Kühlkanal 9, von da aus in Umfangsrichtung um den Elektromotor 5 zum Kühlmittelauslassbereich 17 des Kühlkanals 9 und strömt letztlich über den Kühlmittelauslassanschluss 15 ab. Ein im Kühlkanal 9 vorgesehener Steg 20, der im Bereich der wärmeleitenden Erhebung 13 angeordnet ist und sich radial von der inneren Mantelwand 19 zur äußeren Mantelwand 18 des zweiten Gehäuseteils 4 erstreckt, trennt den in Umfangsrichtung verlaufenden Kühlkanal 9 und bildet dahingehend eine Trennung zwischen dem Kühlmitteleinlassbereich 16 und dem Kühlmittelauslassbereich 17.

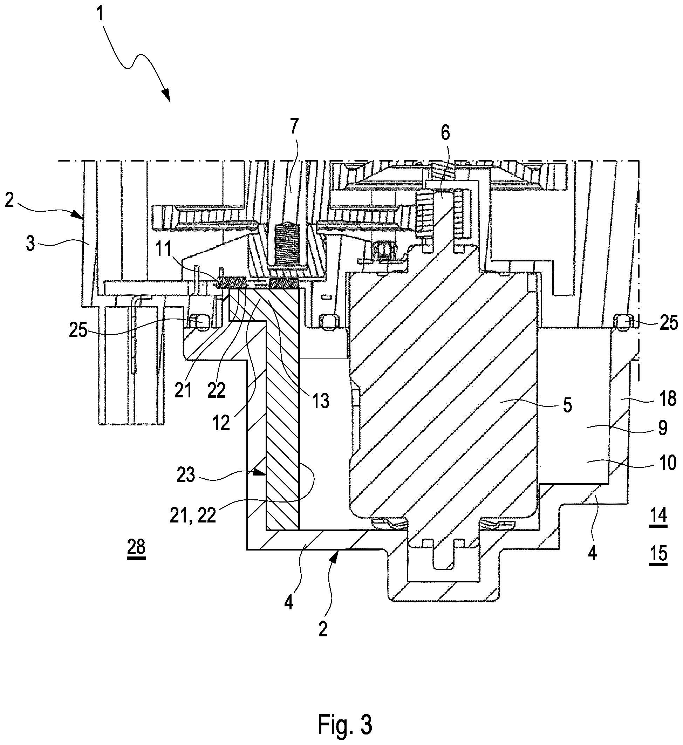

Fig. 3 zeigt eine Schnittdarstellung im Bereich eines Wärmeleitelements 23 im zweiten Gehäuseteil 4 der Stellvorrichtung 1. Bei der Ausführungsvariante mit angeordnetem Wärmeleitelement 23 ist das zweite Gehäuseteil 4 ebenso wie das erste Gehäuseteil 3 aus Kunststoff gefertigt, insbesondere als Kunststoffspritzgussteil. Das Wärmeleitelement 23, welches bevorzugt aus einem gut wärmeleitenden metallischen Werkstoff, besonders bevorzugt aus Kupfer hergestellt ist, bildet im zweiten Gehäuseteil 4 die wärmeleitende Erhebung 13 aus und erstreckt sich von der Aussparung 12 im ersten Gehäuseteil 3 bis zum Kühlkanal 9. Zweckmäßig ist das Wärmeleitelement 23 direkt dem im Kühlkanal 9 strömenden Kühlmittel 10 ausgesetzt und stellt dahingehend eine thermische Kopplung der Elektronik 11 mit dem Kühlmittel 10 sicher. Vorteilhafterweise weist das Wärmeleitelement 23 zumindest an denen mit dem Kühlmittel 10 in direkten Kontakt stehenden Flächen eine elektrisch isolierende Beschichtung 21 auf, zur Vermeidung von Kurzschlüssen an der Elektronik 11. In der gezeigten beispielhaften Ausführungsform ist der Kühlkanal 9 vollständig umlaufend ausgebildet und ist radial nach innen durch den Elektromotor 5 selbst begrenzt, der hierzu wasserdicht bzw. gekapselt ausgestaltet ist bzw. mit einer dichten Hülle versehen ist. Der zuvor beschriebene Steg 20 findet bei dieser Ausführungsform keine Anwendung. Das Wärmeleitelement 23 kann hierbei zumindest teilweise die äußere Begrenzung des Kühlkanals 9 bilden und steht somit in direktem oder bei einer daran angebrachten elektrisch isolierenden Beschichtung 21 in indirektem Kontakt mit dem durchströmenden Kühlmittel 10. Es ist klar, dass zumindest eine hier nicht gezeigte weitere Dichtung vorgesehen sein kann, die ein Kriechen des Kühlmittels 10 entlang des Wärmeleitelements 23 bis zum ersten bzw. bis in das erste Gehäuseteil 3 verhindert. Eine solche Dichtung kann sich einerseits am Wärmeleitelement 23 und andererseits am ersten Gehäuseteil 3 und/oder am zweiten Gehäuseteil 4 abstützen.

In einer bevorzugten Ausführungsform kann das Wärmeleitelement 23 im Kühlkanal 9 den Steg 20 bilden und den Kühlkanal 9 zwischen einem Kühlmitteleinlassbereich 16 und einem Kühlmittelauslassbereich 17 trennen. Das Wärmeleitelement 23 erstreckt sich von der inneren Mantelwand 19 des zweiten Gehäuseteils 4 bzw. bei einem gekapselten Elektromotor 5 von einem Blechbecher bis zur äußeren Mantelwand 18 des zweiten Gehäuseteils 4, zumindest im Bereich der Erhebung 13.

Vorteilhafterweise kann das Wärmeleitelement 23 von dem Kunststoff des zweiten Gehäuseteils 4 zumindest teilweise ummantelt oder umhüllt sein und/oder zumindest teilweise von dem Kunststoff des zweiten Gehäuseteils 4 umspritzt sein. Bevorzugt ist eine nicht vollständige, also nur teilweise Umhüllung bzw. Umspritzung, so dass in den Bereichen der Wärmeübertragung, also im Kühlkanal 9 und/oder im Bereich der zu kühlenden Elektronik 11 keine Umhüllung bzw. Umspritzung vorliegt, was die Wärmeübertragung und somit die Kühlung der Elektronik 11 erheblich verbessert.

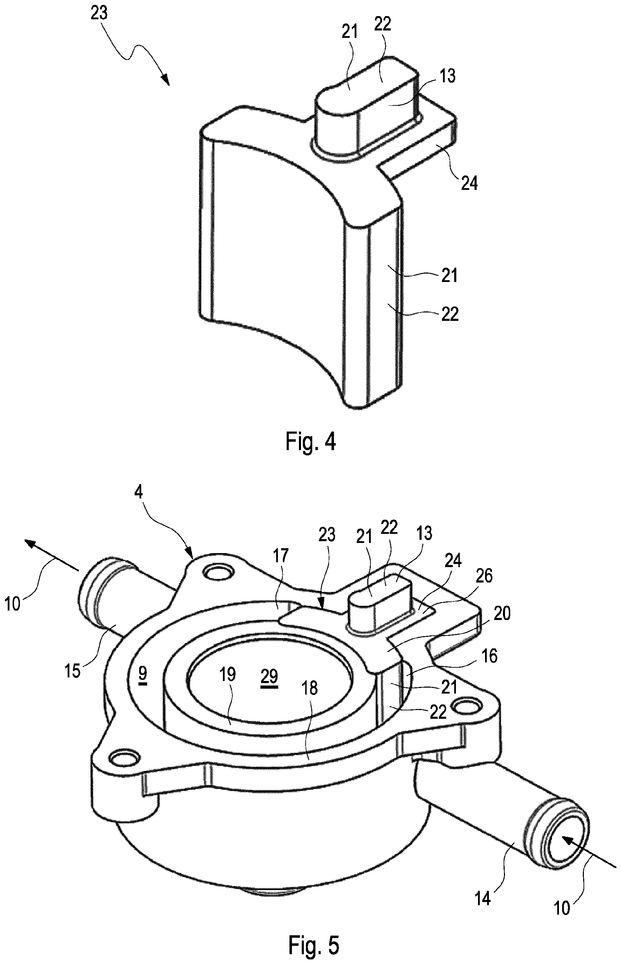

Die Fig. 4 und Fig. 5 zeigen eine isometrische Darstellung eines Wärmeleitelements 23, das als eigenständiges Bauteil in den Kühlkanal 9 des zweiten Gehäuseteils 4 eingesetzt werden kann. Das Wärmeleitelement 23 weist hierbei eine dem Kühlkanal 9 angepasste Wärmeleitkontur auf, die sich in Umfangsrichtung in den Kühlkanal 9 einsetzten lässt. Weiter weist das Wärmeleitelement 23 einen radialen Positionierungsabschnitt 24 auf, der auf der von der Erhebung 13 abgewandten Seite zumindest teilweise in axialer Richtung in das zweite Gehäuseteil 4 ragt. Der Positionierungsabschnitt 24 am Wärmeleitelement 23 dient zur Positionierung im Kühlkanal 9 und stellt gleichzeitig eine Sicherung gegen ein ungewolltes verrutschen des Wärmeleitelement 23 im Kühlkanal 9 dar. Am zweiten Gehäuseteil 4 ist zweckmäßig im Bereich des Positionierungsabschnittes 24 eine zumindest teilweise radiale Aussparung 26 angeordnet, in die sich der Positionierungsabschnitt 24 des Wärmeleitelements 23 axial einsetzen lässt.

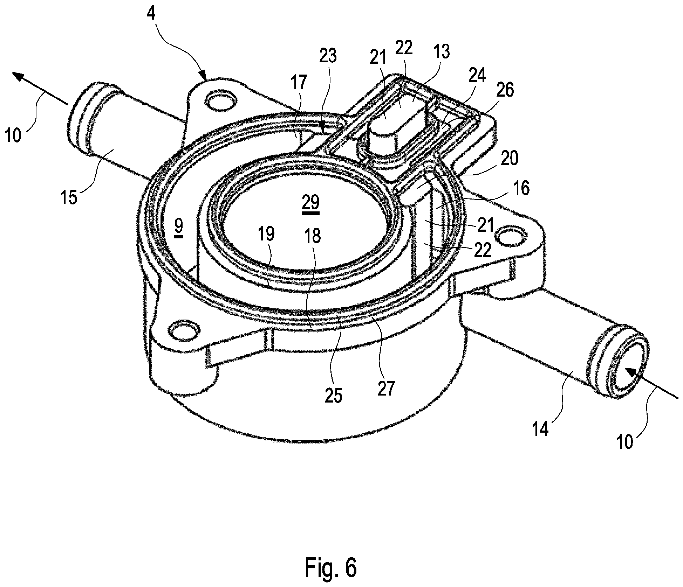

Fig. 6 zeigt einen möglichen Dichtungsverlauf zur Abdichtung des Gehäuses 2 der Stellvorrichtung 1 zwischen dem ersten Gehäuseteil 3 und dem zweiten Gehäuseteil 4. Bevorzugt ist im Bereich des Dichtungsverlaufes sowohl am ersten Gehäuseteil 3 als auch am zweiten Gehäuseteil 4 eine axial umlaufende Nut 27 zur Aufnahme eines Dichtelementes 25 angeordnet. Denkbar wäre ebenso, dass das Dichtelement 25 aus mehreren einzelnen Ringdichtungen besteht, welche zum einen den Kühlkanal 9 nach außen und zum anderen nach innen zum Elektromotor 5 abdichtet.

Bevorzugt vorgesehen zu einer vereinfachten Montage des Gehäuses 2 aus dem ersten Gehäuseteil 3 und dem zweiten Gehäuseteil 4 ist, dass die jeweils zugewandten Seiten der Gehäuseteile mit Ausnahme der Aussparung 12 sowie der Erhebung 13 in einer Ebene zueinander liegen.

## Patentansprüche

1. Stellvorrichtung (1) zum mechanischen Betätigen einer Komponente einer Maschine,
- mit einem Gehäuse (2), das ein erstes Gehäuseteil (3) aus Kunststoff und ein zweites Gehäuseteil (4) aufweist,
- mit einem im zweiten Gehäuseteil (4) angeordneten Elektromotor (5), der zumindest mit seiner Antriebswelle (6) axial in das erste Gehäuseteil (3) hineinragt, zum Antreiben eines außen am Gehäuse (2) angeordneten Stellglieds zum Koppeln mit der zu betätigenden Komponente,
- mit einem im zweiten Gehäuseteil (4) ausgebildeten, von einem Kühlmittel (10) durchströmbaren Kühlkanal (9), der mit einem außen am Gehäuse (2) vorgesehenen Kühlmitteleinlassanschluss (14) und mit einem außen am Gehäuse (2) vorgesehenen Kühlmittelauslassanschluss (15) fluidisch verbunden ist,
- mit einer im ersten Gehäuseteil (3) angeordneten Elektronik (11),
- mit einer zumindest im Bereich der Elektronik (11) am ersten Gehäuseteil (3) ausgebildeten axialen Aussparung (12),
- mit einer am zweiten Gehäuseteil (4) vorgesehenen axialen wärmeleitenden Erhebung (13), die sich zumindest im Bereich der Elektronik (11) axial in die Aussparung (12) hinein erstreckt.

2. Stellvorrichtung nach Anspruch 1,
**dadurch gekennzeichnet,**
**dass** die Erhebung (13) mit der Elektronik (11) direkt oder indirekt wärmeleitend verbunden ist.

3. Stellvorrichtung nach Anspruch 1 oder 2,
**dadurch gekennzeichnet,**
**dass** die Erhebung (13) direkt an der Elektronik (11) anliegt oder über eine elektrische Isolierung (21) und/oder Wärmeleitschicht (22) indirekt an der Elektronik (11) anliegt.

4. Stellvorrichtung nach einem der Ansprüche 1 bis 3,
**dadurch gekennzeichnet,**
**dass** die Erhebung (13) zumindest an einer mit der Elektronik (11) in Kontakt stehenden Fläche eine elektrisch isolierende Beschichtung (21) aufweist.

5. Stellvorrichtung nach einem der Ansprüche 1 bis 4,
**dadurch gekennzeichnet,**
**dass** der Kühlkanal (9) sich in Umfangsrichtung erstreckt und radial zwischen einer äußeren Mantelwand (18) des zweiten Gehäuseteils (4) nach außen und einer inneren Mantelwand (19) des zweiten Gehäuseteils (4) nach innen begrenzt ist.

6. Stellvorrichtung nach Anspruch 5,
**dadurch gekennzeichnet,**
**dass** ein Steg (20) vorgesehen ist, der sich von der äußeren Mantelwand (18) bis zur inneren Mantelwand (19) erstreckt und im Kühlkanal (9) einen mit dem Kühlmitteleinlassanschluss (14) verbundenen Kühlmitteleinlassbereich (16) von einem mit dem Kühlmittelauslassanschluss (15) verbundenen Kühlmittelauslassbereich (17) trennt.

7. Stellvorrichtung nach Anspruch 6,
**dadurch gekennzeichnet,**
**dass** die Erhebung (13) im Bereich des Stegs (20) vorgesehen ist.

8. Stellvorrichtung nach einem der Ansprüche 1 bis 7,
**dadurch gekennzeichnet,**
- **dass** das zweite Gehäuseteil (4) aus Metall hergestellt ist,
- **dass** die Erhebung (13) integral am zweiten Gehäuseteil (4) ausgeformt ist und davon in Richtung erstes Gehäuseteil (3) absteht.

9. Stellvorrichtung nach einem der Ansprüche 1 bis 7,
**dadurch gekennzeichnet,**
- **dass** das zweite Gehäuseteil (4) aus Kunststoff hergestellt ist,
- **dass** das zweite Gehäuseteil (4) ein metallisches Wärmeleitelement (23) aufweist, an dem die Erhebung (13) ausgebildet ist und das sich im zweiten Gehäuseteil (4) bis zum Kühlkanal (9) erstreckt.

10. Stellvorrichtung nach Anspruch 9,
**dadurch gekennzeichnet,**
**dass** das Wärmeleitelement (23) am oder im Kühlkanal (9) dem Kühlmittel (10) ausgesetzt ist.

11. Stellvorrichtung nach Anspruch 10,
**dadurch gekennzeichnet,**
**dass** das Wärmeleitelement (23) zumindest an einer mit dem Kühlmittel (10) in Kontakt stehenden Fläche eine elektrisch isolierende Beschichtung (21) aufweist.

12. Stellvorrichtung nach einem der Ansprüche 9 bis 11 sowie nach Anspruch 7,
**dadurch gekennzeichnet,**
**dass** das Wärmeleitelement (23) im Kühlkanal (9) den Steg (20) bildet.

13. Stellvorrichtung nach einem der Ansprüche 9 bis 12,
**dadurch gekennzeichnet,**
- **dass** das Wärmeleitelement (23) von dem Kunststoff des zweiten Gehäuseteils (4) zumindest teilweise ummantelt ist, und/oder
- **dass** das Wärmeleitelement (23) mit dem Kunststoff des zweiten Gehäuseteils (4) zumindest teilweise umspritzt ist.

14. Stellvorrichtung nach einem der Ansprüche 9 bis 13,
**dadurch gekennzeichnet,**
**dass** das Wärmeleitelement (23) im Bereich des Kühlkanals (9) in das zweite Gehäuseteil (4) eingesetzt ist.

15. Stellvorrichtung nach einem der Ansprüche 9 bis13 sowie nach Anspruch 14,
**dadurch gekennzeichnet,**
- **dass** am zweiten Gehäuseteil (4) eine zumindest teilweise radiale Aussparung (26) an einer zum ersten Gehäuseteil (3) zugewandten Seite im Bereich der Erhebung (13) vorgesehen ist,
- **dass** das Wärmeleitelement (23) im Bereich der Erhebung (13) einen Positionierungsabschnitt (24) aufweist, der radial in dieser Aussparung (26) angeordnet ist.

## Claims

1. Actuating device (1) for the mechanical actuation of a component of a machine,
- comprising a housing (2) which has a first housing part (3) made of plastic and a second housing part (4),
- comprising an electric motor (5) arranged in the second housing part (4) which projects at least with its drive shaft (6) axially into the first housing part (3) for driving an actuator arranged on the outside of the housing (2) for coupling to the component to be actuated,
- comprising a cooling channel (9) formed in the second housing part (4), through which a coolant (10) can flow, which is fluidically connected to a coolant inlet connection (14) provided on the outside of the housing (2) and a coolant outlet connection (15) provided on the outside of the housing (2),
- comprising an electronic system (11) arranged in the first housing part (3),
- comprising an axial recess (12) formed at least in the region of the electronic system (11) on the first housing part (3),
- comprising an axial heat-conducting elevation (13) provided on the second housing part (4) which extends at least in the region of the electronic system (11) axially into the recess (12).

2. The adjusting device according to claim 1,
**characterized in**
**that** the elevation (13) is connected to the electronic system (11) directly or indirectly in a heat-conducting manner.

3. The adjusting device according to claim 1 or 2,
**characterized in**
**that** the elevation (13) abuts directly against the electronic system (11) or abuts indirectly against the electronic system (11) via an electrical insulation (21) and/or heat-conducting layer (22).

4. The adjusting device according to any one of claims 1 to 3,
**characterized in**
**that** the elevation (13) has an electrically conducting coating (21) at least on one surface in contact with the electronic system (11).

5. The adjusting device according to any one of claims 1 to 4,
**characterized in**
**that** the cooling channel (9) extends in the circumferential direction and is delimited radially between an outer jacket wall (18) of the second housing part (4) outwards and an inner jacket wall (19) of the second housing part (4) inwards.

6. The adjusting device according to claim 5,
**characterized in**
**that** a web (20) is provided which extends from the outer jacket wall (18) to the inner jacket wall (19) and in the cooling channel (9) separates a coolant inlet region (16) connected to the coolant inlet connection (14) from a coolant outlet region (17) connected to the coolant outlet connection (15).

7. The adjusting device according to claim 6,
**characterized in**
**that** the elevation (13) is provided in the region of the web (20).

8. The adjusting device according to any one of claims 1 to 7,
**characterized in**
- **that** the second housing part (4) is made of metal,
- **that** the elevation (13) is formed integrally on the second housing part (4) and projects therefrom in the direction of the first housing part (3).

9. The adjusting device according to any one of claims 1 to 7,
**characterized in**
- **that** the second housing part (4) is made of plastic,
- **that** the second housing part (4) has a metal heat-conducting element (23) on which the elevation (13) is formed and which extends in the second housing part (4) as far as the cooling channel (9).

10. The adjusting device according to claim 9,
**characterized in**
**that** the heat-conducting element (23) is exposed to the coolant (10) on or in the cooling channel (9).

11. The adjusting device according to claim 10,
**characterized in,**
**that** the heat-conducting element (23) has an electrically insulating coating (21) at least on a surface in contact with the coolant (10).

12. The adjusting device according to any one of claims 9 to 11 and according to claim 7,
**characterized in**
**that** the heat-conducting element (23) forms the web (20) in the cooling channel (9).

13. The adjusting device according to any one of claims 9 to 12,
**characterized in**
- **that** the heat-conducting element (23) is at least partially encased by the plastic of the second housing part (4), and/or
- **that** the heat-conducting element (23) is at least partially injection-moulded with the plastic of the second housing part (4).

14. The adjusting device according to any one of claims 9 to 13,
**characterized in**
**that** the heat-conducting element (23) is inserted in the second housing part (4) in the region of the cooling channel (9).

15. The adjusting device according to any one of claims 9 to 13 as well as according to claim 14,
**characterized in**
- **that** an at least partially radial recess (26) is provided on the second housing part (4) on a side facing the first housing part (3) in the region of the elevation (13),
- **that** the heat-conducting element (23) has a positioning section (24) in the region of the elevation (13), which is arranged radially in this recess (26).

## Revendications

1. Dispositif de réglage (1) pour l'actionnement mécanique d'un composant d'une machine,
- avec un carter (2), qui présente une première partie de carter (3) en plastique et une deuxième partie de carter (4),
- avec un moteur électrique (5) agencé dans la deuxième partie de carter (4), qui pénètre au moins avec son arbre d'entraînement (6) axialement dans la première partie de carter (3), pour l'entraînement d'un organe de réglage agencé à l'extérieur du carter (2) pour le couplage avec le composant à actionner,
- avec un canal de refroidissement (9) réalisé dans la deuxième partie de carter (4), pouvant être traversé par un réfrigérant (10), qui est relié fluidiquement à un raccord d'entrée de réfrigérant (14) prévu à l'extérieur du carter (2) et à un raccord de sortie de réfrigérant (15) prévu à l'extérieur du carter (2),
- avec une électronique (11) agencée dans la première partie de carter (3),
- avec une cavité axiale (12) réalisée au moins dans la zone de l'électronique (11) au niveau de la première partie de carter (3),
- avec un bossage (13) thermoconducteur axial prévu au niveau de la deuxième partie de carter (4), qui s'étend au moins dans la zone de l'électronique (11) axialement dans la cavité (12).

2. Dispositif de réglage selon la revendication 1,
**caractérisé en ce**
**que** le bossage (13) est relié de manière thermoconductrice directement ou indirectement à l'électronique (11).

3. Dispositif de réglage selon la revendication 1 ou 2,
**caractérisé en ce**
**que** le bossage (13) s'applique directement sur l'électronique (11) ou s'applique indirectement sur l'électronique (11) par le biais d'une isolation électrique (21) et/ou couche thermoconductrice (22).

4. Dispositif de réglage selon l'une quelconque des revendications 1 à 3,
**caractérisé en ce**
**que** le bossage (13) présente un revêtement électriquement isolant (21) au moins au niveau d'une surface en contact avec l'électronique (11).

5. Dispositif de réglage selon l'une quelconque des revendications 1 à 4,
**caractérisé en ce**
**que** le canal de refroidissement (9) s'étend dans la direction périphérique et est délimité radialement entre une paroi d'enveloppe extérieure (18) de la deuxième partie de carter (4) vers l'extérieur et une paroi d'enveloppe intérieure (19) de la deuxième partie de carter (4) vers l'intérieur.

6. Dispositif de réglage selon la revendication 5,
**caractérisé en ce**
**qu'**une traverse (20) est prévue, qui s'étend de la paroi d'enveloppe extérieure (18) jusqu'à la paroi d'enveloppe intérieure (19) et sépare dans le canal de refroidissement (9) une zone d'entrée de réfrigérant (16) reliée au raccord d'entrée de réfrigérant (14) d'une zone de sortie de réfrigérant (17) reliée au raccord de sortie de réfrigérant (15).

7. Dispositif de réglage selon la revendication 6,
**caractérisé en ce**
**que** le bossage (13) est prévu dans la zone de la traverse (20).

8. Dispositif de réglage selon l'une quelconque des revendications 1 à 7,
**caractérisé en ce**
- **que** la deuxième partie de carter (4) est fabriquée en métal,
- **que** le bossage (13) est formé d'un seul tenant au niveau de la deuxième partie de carter (4) et en fait saillie en direction de la première partie de carter (3).

9. Dispositif de réglage selon l'une quelconque des revendications 1 à 7,
**caractérisé en ce**
- **que** la deuxième partie de carter (4) est fabriquée en plastique,
- **que** la deuxième partie de carter (4) présente un élément thermoconducteur métallique (23), au niveau duquel le bossage (13) est réalisé et qui s'étend dans la deuxième partie de carter (4) jusqu'au canal de refroidissement (9).

10. Dispositif de réglage selon la revendication 9,
**caractérisé en ce**
**que** l'élément thermoconducteur (23) est soumis au réfrigérant (10) au niveau de ou dans le canal de refroidissement (9).

11. Dispositif de réglage selon la revendication 10,
**caractérisé en ce**
**que** l'élément thermoconducteur (23) présente un revêtement électriquement isolant (21) au moins au niveau d'une surface étant en contact avec le réfrigérant (10).

12. Dispositif de réglage selon l'une quelconque des revendications 9 à 11 ainsi que selon la revendication 7,
**caractérisé en ce**
**que** l'élément thermoconducteur (23) forme la traverse (20) dans le canal de refroidissement (9).

13. Dispositif de réglage selon l'une quelconque des revendications 9 à 12,
**caractérisé en ce**
- **que** l'élément thermoconducteur (23) est enveloppé au moins en partie par le plastique de la deuxième partie de carter (4), et/ou
- **que** l'élément thermoconducteur (23) est surmoulé au moins en partie avec le plastique de la deuxième partie de carter (4).

14. Dispositif de réglage selon l'une quelconque des revendications 9 à 13,
**caractérisé en ce**
**que** l'élément thermoconducteur (23) est inséré dans la zone du canal de refroidissement (9) dans la deuxième partie de carter (4).

15. Dispositif de réglage selon l'une quelconque des revendications 9 à 13 ainsi que selon la revendication 14,
**caractérisé en ce**
- **qu'**une cavité au moins partiellement radial (26) est prévue au niveau d'un côté tourné vers la première partie de carter (3) dans la zone du bossage (13) au niveau de la deuxième partie de carter (4),
- **que** l'élément thermoconducteur (23) présente une section de positionnement (24) dans la zone du bossage (13), qui est agencée radialement dans cette cavité (26).
